# EUROPEAN PATENT SPECIFICATION

(11) **EP 1 598 976 B1**
(45) Date of publication and mention of the grant of the patent: **25.04.2007**
(21) Application number: 05016778.2
(22) Date of filing: 30.01.2003
(51) Int. Cl.: H04L 1/18

(54) **Data discard method for selective repeat protocols**
Datenablösungsverfahren für selektive Wiederholungsprotokolle
Méthode d'abandon de données pour protocoles de répétition sélective

(30) Priority: 04.02.2002 US 353207 P
(43) Date of publication of application: 23.11.2005
(62) Divisional of application: 03001977.2
(73) Proprietor: ASUSTeK Computer Inc., Peitou, Taipei City (TW)
(72) Inventor: Jiang, Sam Shiaw-Shiang, Hsinchu (TW)
(74) Representative: Hager, Thomas Johannes

(56) References cited:
- WO-A-01/59979
- US-A1- 2001 030 965
- "UNIVERSAL MOBILE TELECOMMUNICATIONS SYSTEM (UMTS);RADIO LINK CONTROL (RLC) PROTOCOL SPECIFICATION (3GPP TS 25.322 VERSION 4.3.0 RELEASE R)" ETSI TS 125 322 V4.3.0, XX, XX, December 2001 (2001-12), pages 51-70, XP002902277
- BYUNG-GON CHUN ET AL: "Auxiliary timeout and selective packet discard schemes to improve TCP performance in PCN environment" COMMUNICATIONS, 1997. ICC '97 MONTREAL, TOWARDS THE KNOWLEDGE MILLENNIUM. 1997 IEEE INTERNATIONAL CONFERENCE ON MONTREAL, QUE., CANADA 8-12 JUNE 1997, NEW YORK, NY, USA,IEEE, US, 8 June 1997 (1997-06-08), pages 381-385, XP010227150 ISBN: 0-7803-3925-8

## Description

### BACKGROUND OF THE INVENTION

### Field of the Invention

The present invention relates to a wireless communications protocol. More specifically, the present invention discloses a method for terminating a data discard signalling procedure.

### Description of the Prior Art

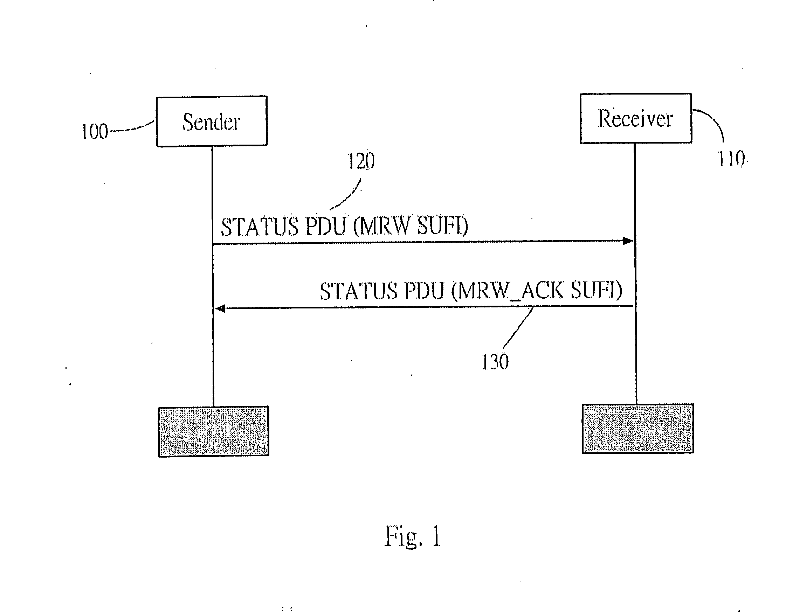

In a wireless communication system, a protocol data unit (PDU), which contains a segment of a service data unit (SDU), may be transmitted and retransmitted for a maximum number of transmissions without positive acknowledgement from the peer receiver. To control the transmission window of the sender, a state variable VT(A) is defined to be the sequence number (SN) following the SN of the last in-sequence acknowledged PDU. Alternatively, to control the reception window of the receiver, a state variable VR(R) is defined to be the SN following the SN of the last in-sequence PDU received. Another state variable, VR(H), is defined to be the SN following the highest SN of any received PDU. A data (SDU) may be transmitted and retransmitted within a predefined duration of time. After a time out period or after the number of transmissions has reached a maximum number, the SDU is deemed out-of-date and is discarded by the transmitter. For acknowledged mode (AM) transmission, the transmitter needs to signal the receiver of the discard of the SDU so that the receiver can move its reception window accordingly. This signalling procedure is called an SDU discard with explicit signalling procedure. Refer to Figure 1 which illustrates the procedure.

A move receiving window (MRW) super-field 120 is utilized to request the receiver 110 to move its reception window and optionally to indicate the set of discarded Radio Link Control (RLC) SDUs, as a result of an RLC SDU discard in the Sender 100. The receiver 110 responds with an acknowledge signal 130.

However, in certain situations, the SDU discard with explicit signalling procedure will not be terminated. In these situations the receiver 110 has moved its reception window to a position which is exactly what the sender 100 wanted to signal to the receiver 110. If the procedure is not terminated when this criterion is fulfilled, the sender 100 must retransmit MRW SUFI 120 when an MRW timer expires. This will waste radio resources and slow down the transmission throughput.

Furthermore, if the number of transmissions of MRW SUFI 120 reaches its maximum value when this criterion is fulfilled, the RLC entity will unnecessarily reset itself. This results in a degradation of transmission performance. The UMTS RLC Protocol Specification (3GPP TS 25.322 Version 4.3.0 Release 4, December 2001, Pages 51-70, also referred as ETSI TS 125 322 Version 4.3.0 Release 4, December 2001) discloses a method for terminating a service data unit discard with explicit signalling, wherein a first PDU is transmitted between a sender and a receiver. The PDUs transmitted by the sender include discard information.

Therefore, there is a need for a more efficient data discard signalling procedure that improves transmission throughput and performance.

### SUMMARY OF THE INVENTION

To achieve these and other advantages and in order to overcome the disadvantages of the conventional method in accordance with the purpose of the invention as embodied and broadly described herein, the present invention provides a data discard signalling procedure which efficiently improves transmission throughput and performance. According to one aspect of the present invention, there is provided a method for terminating a service data unit discard, called hereafter SDU discard, with explicit signalling procedure comprising: transmitting a first status protocol data unit, called hereafter status PDU, comprising a move receiving window super-field by a sender to a receiver; wherein the move receiving window super-field comprises at least a sequence number field, called hereafter SN_MRW_{LENGTH}; and receiving a second status PDU comprising an acknowledgement super-field by the sender from the receiver; wherein if the second status PDU acknowledges all PDUs up to and including a PDU with a sequence number equal to a predetermined value, the SDU discard with explicit signalling procedure is terminated; wherein the predetermined value is equal to SN_MRW_{LENGTH} minus one.

A move receiving window super-field (MRW SUFI) is used to request the receiver to move its reception window and optionally to indicate the set of discarded RLC SDUs, as a result of an RLC SDU discard in the sender.

A length field of 4 bits indicates the number of SN_MRWᵢ fields in the super-field of type MRW.

The values "0001" through "1111" indicate SN_MRWᵢ 1 through 15 respectively. The value "0000" indicates that one SN_MRWᵢ field is present and that the RLC SDU to be discarded in the receiver extends above the configured transmission window in the Sender.

The SN_MRWᵢ fields are 12 bits each. When "Send MRW" is configured, an SN_MRWᵢ shall be used to indicate the end of each discarded RLC SDU, i.e. the number of SN_MRWᵢ fields shall equal the number of RLC SDUs discarded by that MRW SUFI. When "Send MRW" is not configured, an SN_MRWᵢ field shall be used to indicate the end of the last RLC SDU to be discarded in the Receiver and additional ones may optionally be used to indicate the end of other discarded RLC SDUs.

SN_MRWᵢ is the sequence number of the PDU that contains the length indicator of the i:th RLC SDU to be discarded in the receiver (except for SN_MRW_{LENGTH} when NLENGTH = 0). The order of the SN_MRWᵢ shall be in the same sequential order as the RLC SDUs that they refer to.

Additionally, SN_MRW_{LENGTH} requests the receiver to discard all PDUs with a sequence number less than SN_MRW_{LENGTH}, and to move the reception window accordingly.

Furthermore, when N_{LENGTH} is greater than 0, the receiver has to discard the first NLENGTH length indicators and the corresponding data octets in the PDU with sequence number SN_MRW_{LENGTH}.

NLENGTH is 4 bits and is used together with SN_MRW_{LENGTH} to indicate the end of the last RLC SDU to be discarded in the receiver.

N_{LENGTH} indicates which length indicator in the PDU with sequence number SN_MRW_{LENGTH} corresponds to the last RLC SDU to be discarded in the receiver. NLENGTH equal to 0 indicates that the last RLC SDU ended in the PDU with sequence number SN_MRW_{LENGTH} minus 1 and that the first data octet in the PDU with sequence number SN_MRW_{LENGTH} is the first data octet to be reassembled next.

A move receiving window acknowledgement (MRW_ACK) super-field acknowledges the reception of an MRW SUFI. The N field is 4 bits and is set equal to the N_{LENGTH} field in the received MRW SUFI if the SN_ACK field is equal to the SN_MRW_{LENGTH} field. Otherwise N shall be set to 0.

With the aid of this field in combination with the SN_ACK field, it can be determined if the MRW_ACK corresponds to a previously transmitted MRW SUFI.

The SN_ACK field is 12 bits and indicates the updated value of VR(R) after the reception of the MRW SUFI. With the aid of this field in combination with the N field, it can be determined if the MRW_ACK corresponds to a previously transmitted MRW SUFI.

The acknowledgement super-field (ACK SUFI) consists of a type identifier field (ACK) and a sequence number (LSN).

The LSN field is 12 bits and acknowledges the reception of all PDUs with sequence number less than last sequence number (LSN) that are not indicated to be erroneous in earlier parts of the STATUS PDU. This means that if the LSN is set to a value greater than VR(R), all erroneous PDUs shall be included in the same STATUS PDU and if the LSN is set to VR(R), the erroneous PDUs can be split into several STATUS PDUs. At the sender or transmitter, if the value of the LSN is less than or equal to the value of the first error indicated in the STATUS PDU, VT(A) will be updated according to the LSN. Otherwise VT(A) will be updated according to the first error indicated in the STATUS PDU. VT(A) is only updated based on STATUS PDUs where ACK SUFI (or MRW_ACK SUFI) is included. The LSN shall not be set to a value greater than VR(H) or less than VR(R).

In situations where "Send MRW" is not configured, there is no need to signal the last discarded RLC SDU to the receiver. All SN_MRWᵢ fields indicating the end of the RLC SDUs to be discarded in the receiver are optionally included in the MWR SUFI. Only SN_MRW_{LENGTH}, which indicates the receiver to discard all PDUs with a sequence number less than SN_MRW_{LENGTH} and move the reception window accordingly, is mandatorily included in the MWR SUFI. The shortened MRW SUFI has more chance to be piggybacked in an AMD PDU so that an additional STATUS PDU can be saved. The radio performance is therefore increased by this invention.

The sender terminates the SDU discard with explicit signalling procedure if various criteria are fulfilled. However, in certain situations, the SDU discard with explicit signalling procedure will not be terminated.

In certain cases the receiver has moved its reception window to a position beginning from SN_MRW_{LENGTH} , which is exactly what the transmitter wanted to signal to the receiver. If the procedure is not terminated when this criterion is fulfilled, the transmitter must retransmit MRW SUFI when Timer_MRW expires. This will waste radio resources and slow down the transmission throughput.

Furthermore, if the number of transmissions of MRW SUFI reaches its maximum value when this criterion is fulfilled, the RLC entity will unnecessarily reset itself. The transmission performance is degraded.

Therefore, the present invention provides a data discard signalling procedure wherein the MWR SUFI is shortened for cases where "Send MRW" is not configured and the sender shall efficiently terminate the SDU discard with explicit signalling procedure if certain criteria are fulfilled.

Consequently, utilizing the data discard signalling procedure of the present invention, transmission throughput is increased and the transmission performance is improved.

These and other objectives of the present invention will become obvious to those of ordinary skill in the art after reading the following detailed description of preferred embodiments.

It is to be understood that both the foregoing general description and the following detailed description are exemplary, and are intended to provide further explanation of the invention as claimed.

### BRIEF DESCRITPION OF THE DRAWINGS

The accompanying drawings are included to provide a further understanding of the invention, and are incorporated in and constitute a part of this specification. The drawings illustrate embodiments of the invention and, together with the description, serve to explain the principles of the invention. In the drawings,
Figure 1 is a diagram showing an SDU discard with explicit signalling procedure;
Figure 2 is a drawing illustrating a format for a move receiving window super-field (MRW SUFI) according to an embodiment of the present invention;
Figure 3 is a drawing illustrating a format of an MRW_ACK according to an embodiment of the present invention;
Figure 4 is a drawing illustrating the ACK super-field in a STATUS PDU according to an embodiment of the present invention; and
Figure 5 is a drawing illustrating PDU structure according to an embodiment of the present invention.

### DESCRIPTION OF THE PREFERRED EMBODIMENTS

Reference will now be made in detail to the preferred embodiments of the present invention, examples of which are illustrated in the accompanying drawings. Wherever possible, the same reference numbers are used in the drawings and the description to refer to the same or like parts.

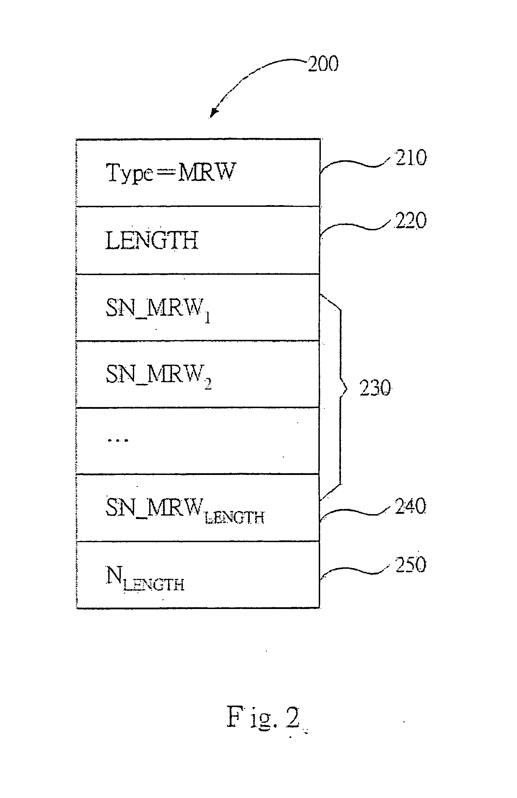

A move receiving window super-field is used to request the receiver to move its reception window and optionally to indicate the set of discarded RLC SDUs, as a result of an RLC SDU discard in the sender. Refer to Figure 2 which illustrates a format for the move receiving window super-field (MRW SUFI).

In an embodiment of the present invention, the length field 220 is 4 bits. It indicates the number of SN_MRWᵢ fields 230 in the super-field of type MRW 200.

The values "0001" through "1111" indicate that the number of SN_MRWᵢ fields contained in the MRW SUFI is 1 through 15 respectively. The value "0000" indicates that one SN_MRWᵢ field 230 is present and that the RLC SDU to be discarded in the receiver extends above the configured transmission window in the sender.

The SN_MRWᵢ fields 230 are 12 bits each. When "Send MRW" is configured, an SN_MRWᵢ 230 shall be used to indicate the end of each discarded RLC SDU, i.e. the number of SN_MRWᵢ fields 230 shall equal the number of RLC SDUs discarded by that MRW SUFI. When "Send MRW" is not configured, an SN_MRWᵢ field 230 shall be used to indicate the end of the last RLC SDU to be discarded in the receiver and additional ones may optionally be used to indicate the end of other discarded RLC SDUs.

SN_MRWᵢ is the sequence number of the PDU that contains the length indicator of the i:th RLC SDU to be discarded in the receiver (except for SN_MRW_{LENGTH} 240 when N_{LENGTH} = 0). The order of the SN_MRWᵢ shall be in the same sequential order as the RLC SDUs that they refer to.

Additionally SN_MRW_{LENGTH} 240 requests the receiver to discard all PDUs with a sequence number less than SN_MRW_{LENGTH} 240, and to move the reception window accordingly.

Furthermore, when _{LENGTH} 250 is greater than 0, the receiver has to discard the first _{LENGTH} length indicators and the corresponding data octets in the PDU with sequence number SN_MRW_{LENGTH} 240.

N_{LENGTH} 250 is 4 bits and is used together with SN_MRW_{LENGTH} 240 to indicate the end of the last RLC SDU to be discarded in the receiver.

NLENGTH 250 indicates which length indicator in the PDU with sequence number SN_MRW_{LENGTH} 240 corresponds to the last RLC SDU to be discarded in the receiver. N_{LENGTH} 250 equals 0 indicates that the last RLC SDU ended in the PDU with sequence number SN_MRW_{LENGTH} 240 minus 1 and that the first data octet in the PDU with sequence number SN_MRW_{LENGTH} 240 is the first data octet to be reassembled next.

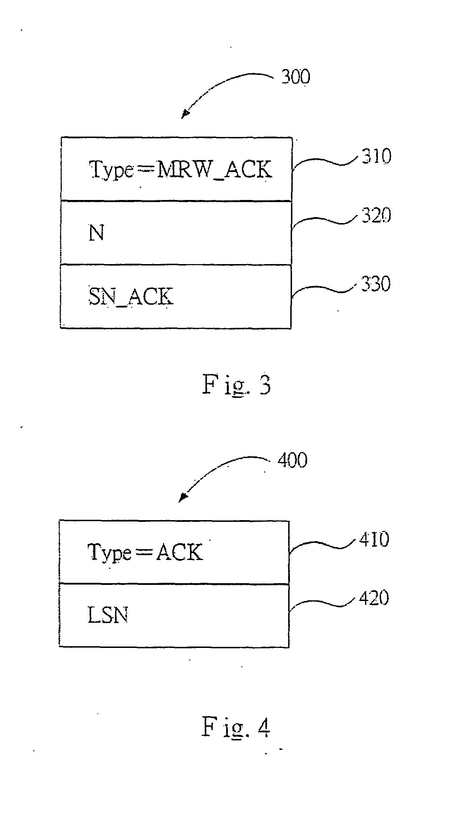

A move receiving window acknowledgement super-field acknowledges the reception of a MRW SUFI. Refer to Figure 3 which illustrates the format of the MRW_ACK 300.

The N field 320 is 4 bits and is set equal to the N_{LENGTH} field in the received MRW SUFI if the SN_ACK field is equal to the SN_MRW_{LENGTH} field. Otherwise N 320 shall be set to 0.

With the aid of this field in combination with the SN_ACK field 330, it can be determined if the MRW_ACK 300 corresponds to a previously transmitted MRW SUFI.

The SN_ACK field 330 is 12 bits and indicates the updated value or VR(R) after the reception of the MRW SUFI. With the aid of this field in combination with the N field 320, it can be determined if the MRW_ACK 300 corresponds to- a previously transmitted MRW SUFI.

The sender terminates the SDU discard with explicit signalling procedure if one of the following criteria is fulfilled:
- a STATUS PDU/piggybacked STATUS PDU containing an MRW_ACK SUFI is received, and the SN_ACK field in the received MRW_ACK SUFI is greater than the SN_MRW_{LENGTH} field in the transmitted MRW_SUFI, and the N field in the received MRW_ACK SUFI is set equal to "0000";
- a STATUS PDU/piggybacked STATUS PDU containing an MRW_ACK SUFI is received, and the SN_ACK field in the received MRW_ACK SUFI is equal to the SN_MRW_{LENGTH} field in the transmitted MRW_SUFI, and the N field in the received MRW_ACK SUFI is set equal to the _{LENGTH} field in the transmitted MRW SUFI;
- a STATUS PDU/piggybacked STATUS PDU containing an ACK SUFI is received, and the LSN field in the received ACK SUFI is greater than the SN_MRW _{LENGTH} field in the transmitted MRW SUFI.

Refer to Figure 4 which illustrates the ACK fields in a STATUS PDU. The acknowledgement super-field (ACK SUFI) 400 consists of a type identifier field (ACK) 410 and a sequence number (LSN) 420.

The LSN field 420 is 12 bits and acknowledges the reception of all PDUs with sequence number less than LSN and not indicated to be erroneous in earlier parts of the STATUS PDU. This means that if the LSN 420 is set to a value greater than VR(R), all erroneous PDUs shall be included in the same STATUS PDU and if the LSN 420 is set to VR(R), the erroneous PDUs can be split into several STATUS PDUs. At the sender or transmitter, if the value of the LSN 420 is less than or equal to the value of the first error indicated in the STATUS PDU, VT(A) will be updated according to the LSN 420. Otherwise VT(A) will be updated according to the first error indicated in the STATUS PDU. VT(A) is only updated based on STATUS PDUs where ACK SUFI (or MRW_ACK SUFI) is included. The LSN 420 shall not be set to a value greater than VR(H) or less than VR(R).

The third terminating criterion shown above can also be recognized as:
- a STATUS PDU/piggybacked STATUS PDU containing ACK SUFI is received, and this STATUS PDU/piggybacked STATUS PDU acknowledges all PDUs up to and including the PDU with sequence number equal to the SN_MRW_{LENGTH} field in the transmitted MRW SUFI.
   The above criterion is equivalent to:
- a STATUS PDU/piggybacked STATUS PDU containing ACK SUFI is received, VT(A) to be updated by this STATUS PDU/piggybacked STATUS PDU is greater than the SN_MRW_{LENGTH} field in the transmitted MRW SUFI.
   Both of these criteria are equivalent to:
- On the reception of a STATUS PDU which contains an ACK SUFI indicating VR(R) is greater than SN_MRW_{LENGTH}

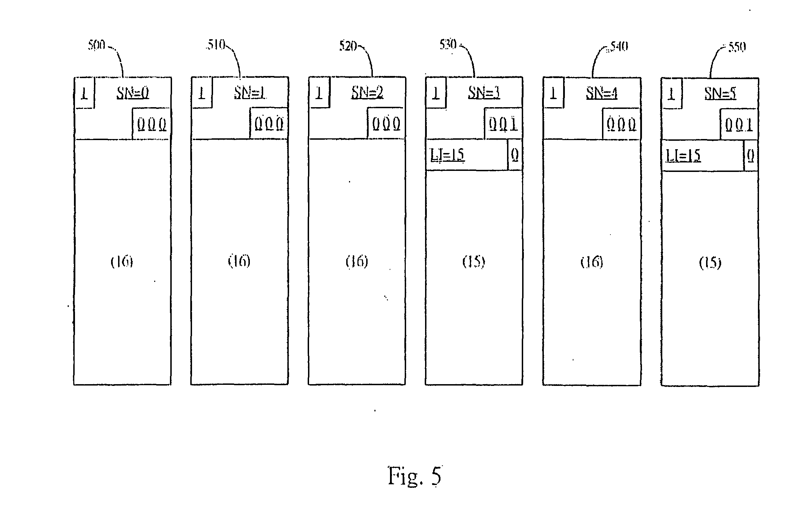

Refer to Figure 5, which is a drawing illustrating PDU structure according to an embodiment of the present invention

SDU1 is carried by PDUs of SN=0 500, SN=1 510, SN=2 520, and SN=3 530. SDU2 is carried by PDUs of SN=4 540 and SN=5 550. Suppose that "Send MRW" is not configured for this RLC entity and SDU1 is discarded by the sender so that a SDU discard with explicit signalling procedure is initiated. The previous example illustrated "an SN_MRWᵢ field 230 shall be used to indicate the end of the last RLC SDU to be discarded in the receiver". Thus, two SN_MRWᵢ fields will be needed: SN_MRW₁ = 3 (12 bits) and SN_MRW₂ = SN_MRW_{LENGTH} = 4(12 bits), together with LENGTH =2 (0010, 4 bits) and N2 = N_{LENGTH} = 0000 and Type=MWR(4 bits). Thus, at least a total of 36 bits is needed.

In fact, for the case where "Send MRW" is not configured, there is no need to signal the last discarded RLC SDU to the receiver. Thus, SN_MRW₁ = 3 can be omitted in the MRW SUFI. Therefore, twelve bits can be saved. The shortened MRW SUFI has more chance to be piggybacked in an AMD PDU so that an additional STATUS PDU can be saved. The radio performance is therefore increased by this invention. This is another advantage of the present invention.

In general, at the sender, if "Send MRW" is not configured for this RLC entity, all SN_MRWᵢ fields indicating the end of the RLC SDUs to be discarded in the receiver are optionally included in the MWR SUFI. Only SN_MRW_{LENGTH} indicating the receiver to discard all PDUs with a sequence number less than SN_MRW_{LENGTH}, and to move the reception window accordingly are mandatorily included.

In addition, if SN_MRW_{LENGTH} is the only SN_MRWᵢ field included in the MRW SUFI:
- LENGTH =0001 if SN_MRW_{LENGTH} is within the configured transmission window; or
- LENGTH =0000 if SN_MRW_{LENGTH} is above the configured transmission window.

Refer to Figure 5 again. If SDU1 carried on PDUs of SN = 0 500 through SN=3 530 is discarded, the contents of MWR SUFI will be 24 bits long only: Type = MRW (4 bits), LENGTH = 0001, SN_MWR₁ = 4 (12 bits), N₁ = 0000. Thus 8 bits fewer are needed.

For the case where "Send MRW" is configured, when the last discarded SDU ended in an AMD PDU, and its Length Indicator is present in the same AMD PDU, and no new SDU is present inside this AMD PDU, SN_MRW_{LENGTH} 240 must be set to equal to I plus the sequence number of the PDU which contains the length indicator of the last discarded SDU. Only fourteen SN_MRW₁ fields 230 are left to indicate the end of each discarded SDUs. Therefore, if the fifteenth discarded SDUs ended in an AMD PDU, and its Length Indicator is present in the same AMD PDU, and no new SDU is present inside this AMD PDU, this SDU can not be fitted in the same MRW SUFI 200 as the other fourteen discarded SDUs and two separate SDU discard with explicit signalling procedures must be initiated.

In addition, in certain situations, the SDU discard with explicit signalling procedure will not be terminated. The following criterion will not terminate the SDU discard with explicit signalling procedure:
- a STATUS PDU/piggybacked STATUS PDU containing ACK SUFI is received, VT(A) to be updated by this STATUS PDU/piggybacked STATUS PDU is equal to the SN_MRW_{LENGTH} field in the transmitted MRW SUFI.

In fact, when the above criterion is fulfilled, the receiver has moved its reception window to a position beginning from SN_MRW_{LENGTH}, which is exactly what the transmitter wanted to signal to the receiver. If the procedure is not terminated when this criterion is fulfilled, the transmitter must retransmit MRW SUFI when Timer_MRW expires. This will waste radio resources and slow down the transmission throughput.

Furthermore, if the number of transmissions of MRW SUFI reaches its maximum value when this criterion is fulfilled, the RLC entity will unnecessarily reset itself. The transmission performance is degraded.

Therefore, an embodiment of the present invention provides that the sender shall terminate the SDU discard with explicit signalling procedure if the following criterion is fulfilled:
- a STATUS PDU/piggybacked STATUS PDU containing ACK SUFI is received, VT(A) to be updated by this STATUS PDU/piggybacked STATUS PDU is greater than or equal to the SN_MRW_{LENGTH} field in the transmitted MRW SUFI.

In another embodiment of the present invention, the sender shall terminate the SDU discard with explicit signalling procedure if the following criterion is fulfilled:
- a STATUS PDU/piggybacked STATUS PDU containing ACK SUFI is received, and this STATUS PDU/piggybacked STATUS PDU acknowledges all PDUs up to and including the PDU with sequence number equal to the SN_MRW_{LENGTH} field in the transmitted MRW SUFI minus one.

In another embodiment of the present invention, the sender shall terminate the SDU discard with explicit signalling procedure if the following criterion is fulfilled:
- On the reception of a STATUS PDU which contains an ACK SUFI indicating VR(R) is greater than or equal to SN_MRW_{LENGTH}

If any of these various criteria are met, the SDU discard with explicit signalling procedure can be efficiently terminated resulting in increased transmission throughput. Utilizing the data discard signalling procedure of the present invention, transmission throughput is increased and the transmission performance is improved.

It will be apparent to those skilled in the art that various modifications and variations can be made to the present invention without departing from the scope of the invention. In view of the foregoing, it is intended that the present invention cover modifications and variations of this invention provided they fall within the scope of the invention and its equivalent.

## Claims

1. A method for terminating a service data unit discard, called hereafter SDU discard, with explicit signalling procedure comprising:
transmitting a first status protocol data unit (120), called hereafter status PDU, comprising a move receiving window super-field (200) by a sender (100) to a receiver (110);
wherein the move receiving window super-field (200) comprises at least a sequence number field (240), called hereafter SN_MRW_{LENGTH}, indicating the receiver to discard all PDUs with sequence number less than SN_MRW_{LENGTH} and to move a reception window to begin with SN_MRW_{LENGTH};
the first status PDU comprises an N_{LENGTH} field indicating which length indicator in a PDU with sequence number SN_MRW_{LENGTH} corresponds to a last SDU to be discarded at the receiver (110);
wherein a length indicator field is a field in a PDU that indicates an ending position of an SDU within a PDU and a sequence number is a field in a PDU that indicates the sequential order of the PDU among other PDUs, and
receiving by the sender (100) a second status PDU (130) comprising an acknowledgement super-field (400), the second status PDU (130) sent from the receiver (110);
wherein, if the second status PDU (130) acknowledges all PDUs up to and including a PDU with a sequence number equal to a predetermined value, the SDU discard with explicit signalling procedure is terminated;
wherein the predetermined value is equal to SN_MRW_{LENGTH} (240) minus one.

2. The method for terminating the SDU discard with explicit signalling procedure of claim 1, wherein the first status PDU is a piggybacked PDU.

3. The method for terminating the SDU discard with explicit signalling procedure of claim 1, wherein the second status PDU is a piggybacked PDU.

## Patentansprüche

1. Verfahren zum Beenden eines Dienstdateneinheit-Verwerfens, im folgenden SDU-Verwerfen genannt, mit expliziter Signalgebungsprozedur, umfassend:
Übertragen einer ersten Status-Protokolldateneinheit (120), im folgenden Status-PDU genannt, die ein Bewegungsempfangsfenster-Superfeld (200) umfasst, durch einen Sender (100) an einen Empfänger (110);
wobei das Bewegungsempfangfenster-Superfeld (200) mindestens ein Sequenznummernfeld (240) umfasst, im folgenden SN_MRW_{Length} genannt, das dem Empfänger angibt, alle PDUs mit Sequenznummer kleiner als SN_MRW_{Length} zu verwerfen und ein Empfangsfenster bewegt, mit SN_MRW_{Length} zu beginnen;
wobei die erste Status-PDU ein N_{Length}-Feld umfasst, das angibt, welcher Längenindikator in einer PDU mit Sequenznummer SN_MRW_{Length} einer letzten bei dem Empfänger (110) zu verwerfenden SDU entspricht;
wobei ein Längenindikatorfeld ein Feld in einer PDU ist, das eine Endposition einer SDU innerhalb einer PDU anzeigt, und eine Sequenznummer ein Feld in einer PDU ist, das die sequenzielle Anordnung der PDU unter anderen PDUs anzeigt, und
Empfangen einer zweiten Status-PDU (130), die ein Qittierungs-Superfeld (400) umfasst, durch den Sender (100), wobei die zweite Status-PDU (130) von dem Empfänger (110) gesendet ist;
wobei, wenn die zweite Status-PDU (130) alle PDUs bis zu und einschließlich einer PDU mit einer Sequenznummer gleich einem vorbestimmten Wert quittiert, das SDU-Verwerfen mit expliziter Signalgebungsprozedur beendet ist;
wobei der vorbestimmte Wert gleich SN_MRW_{Length} (240) minus eins ist.

2. Verfahren zum Beenden des SDU-Verwerfens mit expliziter Signalgebungsprozedur gemäß Anspruch 1, wobei die erste Status-PDU eine Huckepack-PDU ist.

3. Verfahren zum Beenden des SDU-Verwerfens mit expliziter Signalgebungsprozedur gemäß Anspruch 1, wobei die zweite Status-PDU eine Huckepack-PDU ist.

## Revendications

1. Procédé pour clore une procédure d'effacement d'unité de données de service, appelée ci-après effacement de SDU, avec signalisation explicite comprenant :
la transmission d'une première unité de données de protocole d'état (120), appelée ci-après PDU d'état, comprenant un superchamp de déplacement de fenêtre de réception (200) par un émetteur (100) vers un récepteur (110) ;
dans lequel le superchamp de déplacement de fenêtre de réception (200) comprend au moins un champ de numéro de séquence (240), appelé ci-après SN_MRW_{LONGUEUR}, indiquant au récepteur d'effacer toutes les PDU ayant un numéro de séquence inférieur à SN_MRW_{LONGUEUR} et de déplacer une fenêtre de réception pour commencer par SN_MRW_{LONGUEUR} ;
la première PDU d'état comprend un champ N_{LONGUEUR} indiquant quel indicateur de longueur dans une PDU ayant comme numéro de séquence SN_MRW_{LONGUEUR} correspond à une dernière SDU à effacer chez le récepteur (110) ;
dans lequel un champ d'indicateur de longueur est un champ d'une PDU qui indique une position de fin d'une SDU à l'intérieur d'une PDU et un numéro de séquence est un champ d'une PDU qui indique l'ordre séquentiel de la PDU parmi d'autres PDU, et
la réception par l'émetteur (100) d'une deuxième PDU d'état (130) comprenant un superchamp d'accusé de réception (400), la deuxième PDU d'état (130) étant envoyée par le récepteur (110) ;
dans lequel, si la deuxième PDU d'état (130) accuse réception de toutes les PDU jusque et y compris une PDU ayant un numéro de séquence égal à une valeur prédéterminée, on clôt la procédure d'effacement de SDU avec signalisation explicite ;
dans lequel la valeur prédéterminée est égale à SN_MRW_{LONGUEUR} (240) moins un.

2. Procédé pour clore la procédure d'effacement de SDU avec signalisation explicite selon la revendication 1, dans lequel la première PDU d'état est une PDU superposée.

3. Procédé pour clore la procédure d'effacement de SDU avec signalisation explicite selon la revendication 1, dans lequel la deuxième PDU d'état est une PDU superposée.
